# FASCICULE DE BREVET EUROPEEN

(11) **EP 1 190 760 B1**
(45) Date de publication et mention de la délivrance du brevet: **21.12.2005**
(21) Numéro de dépôt: 01121988.8
(22) Date de dépôt: 13.09.2001
(51) Int. Cl.: B01D 53/26, B01D 53/04, B65D 81/26, B65D 51/30

(54) **Absorbeur d'humidité qui empêche le versement du liquide condensé**
Feuchtigkeitabsorber mit Vorrichtung zur Verhinderung des Vergiessens kondensierter Flüssigkeit
Moisture absorber which prevents condensed liquid from pouring

(30) Priorité: 13.09.2000 IT GE000032
(43) Date de publication de la demande: 27.03.2002
(73) Titulaire: UHU BISON S.P.A., 20124 Milano (IT)
(72) Inventeur: Tortello, Roberto, 17051 Andora (SV) (IT)
(74) Mandataire: Forattini, Amelia

(56) Documents cités:
- FR-A- 2 627 401
- US-A- 1 914 941
- US-A- 4 015 959
- US-A- 4 394 144
- US-A- 5 305 932

## Description

Cette invention concerne un absorbeur d'humidité ou déshumidificateur particulièrement approprié pour empêcher le versement du liquide condensé.

Selon la technique connue, les absorbeurs d'humidité ou déshumidificateurs sont formés d'un élément supérieur perméable et d'une cuvette inférieure pour y collecter le liquide de condensation, ces deux éléments étant généralement séparés par une grille intermédiaire sur laquelle des sels hygroscopiques, normalement à base de chlorure de chaux, sont placés pour absorber, par réaction chimique, l'humidité de l'air, ce qui donne lieu à la génération du liquide de condensation, collecté dans la cuvette placée au dessous.

Un des inconvénients de ces déshumidificateurs connus c'est que le liquide de condensation peut facilement s'épancher lorsque les déshumidificateurs sont rapidement déplacés, par exemple lors de leur transport ou par impact ou d'autres causes similaires.

Cet inconvénient est grave parce que le liquide de condensation, saturé de sels hygroscopiques, est très agressif, irritant à contact avec la peau et les yeux, fastidieux au toucher, sale, corrosif et causant des tâches indélébiles sur certains matériaux.

Les déshumidificateurs connus ont aussi l'inconvénient que l'air ambiant à déshumidifier ne vient à contact avec les sels hygroscopiques qu'à travers les trous pratiqués dans l'élément supérieur et donc en mesure réduite et unidirectionnelle.

Enfin, les déshumidificateurs connus ont l'inconvénient que le liquide de condensation, étant visqueux et huileux, a la tendance de former une patine et d'obstruer les petits trous de la grille.

Un dispositif pour obvier à de tels inconvénients est déjà connu, décrit dans le brevet N, US 1,914,941. Ladite invention consiste en un déshumidificateur dans lequel les sels sont situés dans la partie supérieure du couvercle et les ouvertures d'aération immédiatement en dessous, le liquide coule ensuite dans le récipient inférieur en passant au travers d'une partie intermédiaire qui a une forme de cône renversé. Une telle invention ne résout en aucun cas l'inconvénient de la libre circulation de l'air au travers des sels, étant donné que ces derniers sont disposés dans le couvercle et que l'air peut donc les rejoindre uniquement par le bas. Un tel dispositif ne permet pas par ailleurs l'utilisation de sels en sachet, beaucoup plus pratiques par rapport aux sels épars ou compressés, étant donné que l'on évite un contact direct avec ceux-ci, néfastes pour les raisons exposés ci-dessus.

Cette invention a le but d'obvier à ces inconvénients par la réalisation d'un absorbeur d'humidité qui empêche le versement du liquide de condensation et qui offre deux parcours divers à l'air pour venir à contact avec les sels hygroscopiques, et que la grille ne soit pas engorgée.

Pour parvenir à ces fins préfixés, la grille a été réalisée en entonnoir et étanche par rapport à la cuvette située au dessous, de façon que le liquide y reste emprisonné.

Afin que l'air puisse suivre deux parcours différents pour venir à contact avec les sels hygroscopiques, l'absorbeur d'humidité a été conçu de façon que, au niveau de son plan diamétral horizontal, une ouverture périmétrale, substantiellement annulaire, reste entre l'élément supérieur et la cuvette inférieure.

Ci-après sont illustrés quelques-uns des nombreux avantages qu'on peut obtenir avec cette invention.

Grâce à sa particulière capacité d'empêcher l'épanchement du liquide de condensation, cet absorbeur d'humidité peut être utilisé pour déshumidifier et parfumer des tiroirs ou des objets similaires, où l'absorbeur d'humidité, au moment de l'ouverture et/ou la fermeture de ces objets, pourra subir de fortes secousses sans que cela cause de fâcheux épanchements de liquide.

Evidemment, il est aussi possible d'ajouter des essences parfumées aux sels hygroscopiques pour rendre plus agréable l'odeur dans les pièces où l'absorbeur d'humidité est utilisé.

Un autre avantage de cet absorbeur d'humidité dérive du double parcours de l'air pour venir à contact avec les sels hygroscopiques; ce fait le rend plus efficace, même s'il est de petites dimensions et lorsqu'il est utilisé dans des espaces étroites et fermées, insuffisamment ventilées, tels que les tiroirs ou les armoires.

Selon cette invention, l'absorbeur d'humidité est réalisé en trois éléments, qui ont été spécifiquement conçus pour obtenir les buts préfixés.

Sa partie supérieure est formée d'une calotte de aération, trouée en haut.

La paroi latérale de la calotte se dédouble, pour faire descendre à l'intérieur une lamelle annulaire formant une came.

Sa partie inférieure est formée à cuvette pour recevoir le liquide de condensation.

Sa partie intermédiaire remplace la grille et a la tâche de supporter le sachet transpirant qui contient les sels hygroscopiques. Le fond de la partie intermédiaire est en entonnoir, c'est-à-dire à cône renversé, avec un trou central en correspondance du sommet; des ailettes radiales, sur lesquelles le sachet avec les sels est posé, sont solidaires avec le fond, de façon que ce sachet reste donc renfermé à l'intérieur de la calotte supérieure.

Cette partie intermédiaire, qui pour simplifier sera dénommée ci-après "l'entonnoir", s'embroche étanchement dans la cuvette, s'encastrant sur son bord. Le liquide de condensation descend par gravité dans l'entonnoir et s'écoule sur le fond en pente vers le centre pour y engager le trou central et couler dans la cuvette. Grâce à l'étanchéité entre l'entonnoir et la cuvette, le liquide de condensation reste renfermé dans la cuvette et n'en pourra plus sortir accidentellement.

Quelques ailettes radiales de l'entonnoir ont des évidements pour loger la lamelle annulaire interne de la calotte, tandis que d'autres ailettes ont un dent formant un cliquet pour le bord inférieur de cette lamelle annulaire et, par son profil à came, la calotte est soulevée ou abaissée selon sa position par rapport à la cuvette.

Cet artifice permet d'obtenir une ouverture périmétrale continue entre la calotte et la cuvette, ce qui permet l'entrée latérale de l'air dans l'absorbeur d'humidité, pour investir directement d'en bas toute la surface du sachet des sels. L'accouplement de ce flux provenant du côté inférieur du sachet des sels au flux provenant des trous en haut de la calotte, produit une circulation d'air qui donne une efficacité très élevée à l'absorbeur d'humidité.

Tous ces avantages et maints d'autres encore sont illustrés dans la description des figures suivantes, ici annexées seulement à titre illustratif et non pas limitatif où:
La fig.1 montre l'absorbeur d'humidité faisant l'objet de cette invention en position fermée;
La fig. 2 montre l'absorbeur d'humidité de la figure 1 en position d'emploi, avec ouverture périmétrale continue;
La fig. 3 est une vue éclatée de l'absorbeur d'humidité illustré dans la fig. 1;
La fig.4 est une section transversale de l'absorbeur d'humidité en position ouverte de la fig. 2.

Dans les différentes figures, les éléments similaires ont été indiqués avec les mêmes symboles numériques.

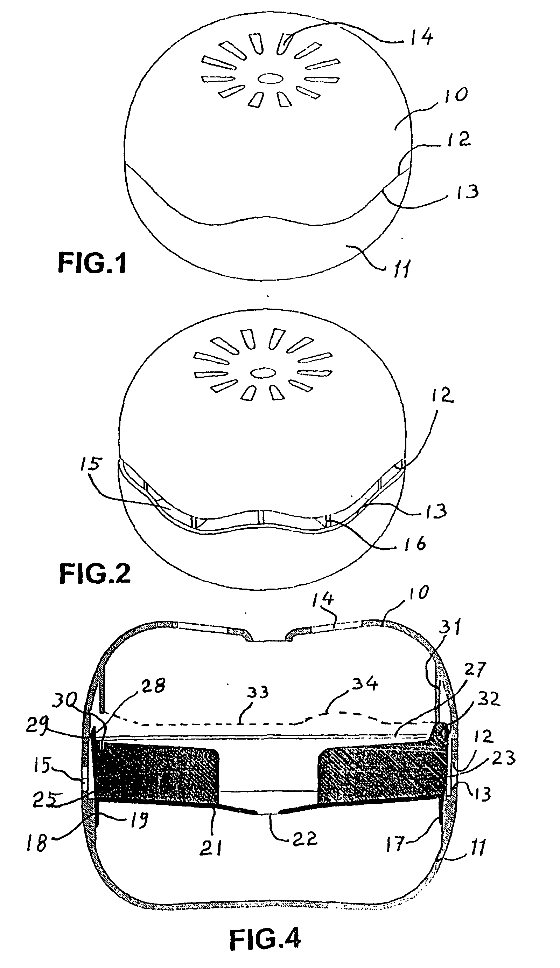

La Fig. 1 montre l'absorbeur d'humidité en position fermée, pour le transport ou l'entreposage, où l'on peut reconnaître la calotte de aération supérieure 10 et la cuvette inférieure 11 dont les bords complémentaires, indiqués respectivement par 12 et 13, ont un développement sinusoïdal et se joignent parfaitement.

Des trous d'aération 14 ont été percés dans le sommet de la calotte.

La fig. 2 montre l'absorbeur d'humidité en position de service, c'est-à-dire avec ses bords 12 e 13 séparés pour former une ouverture 15 périmétrale continue et essentiellement annulaire.

Par l'intérieur de l'ouverture 15 on entrevoit l'entonnoir 16.

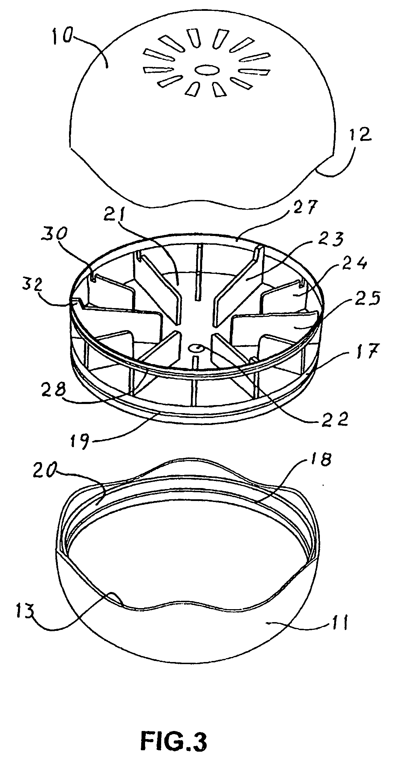

Dans la vue éclatée de la fig. 3 la forme de l'entonnoir 16 est visible davantage, surtout par comparaison avec la section de la fig. 4 et avec la description suivante.

L'entonnoir 16 est fabriqué tout d'une pièce.

Inférieurement, l'entonnoir 16 a un anneau 17 dont le diamètre lui permet de justesse à entrer dans la cuvette 11 pour y bloquer étanchement l'entonnoir 16, grâce à un raccord à déclenchement de la rainure annulaire 18 dans la cuvette avec la correspondant rainure annulaire 19 de l'anneau 17.

Un siège annulaire 20 (illustré seulement dans la fig.3) pourra être avantageusement pratiqué à l'intérieur des parois latérales de la cuvette 11 pour y loger de justesse l'anneau 17 et ultérieurement bloquer en position l'anneau 17, augmentant ainsi l'étanchéité de la cuvette 11.

Pour empêcher d'une manière durable tout mouvement entre l'anneau 17 et le siège annulaire 20 ainsi que leur rotation réciproque, l'anneau 17 et le siège 20 sont munis de crans d'arrêt.

Le fond 21 de l'entonnoir 16 est formé d'une surface inclinée vers le centre, où un trou 22 a été percé pour drainer le liquide de condensation collecté dans la cuvette 11.

L'entonnoir 16 est muni d'ailettes radiales verticales 23, 24, 25 en nombre suffisant pour supporter d'une façon uniforme le sachet rempli de sels hygroscopiques. Ces ailettes sont alternativement plus courtes 24 ou plus longues 23, 25 pour ne pas créer des étranglements sur le fond 21 de l'entonnoir, exactement en proximité du trou 22.

L'entonnoir 16 termine en haut par une bague 27 munie d'un ressaut annulaire 28, s'emboîtant à déclenchement dans la calotte 10 où un autre ressaut annulaire 29 correspondant est pratiqué. Donc, lorsque l'entonnoir a été bloqué dans la cuvette 11, le sachet avec les sels hygroscopiques sera posé sur les ailettes de l'entonnoir et la calotte 10 y sera appliquée à déclenchement, ce dernier pouvant pivoter par rapport à l'entonnoir 16 qui lui, est solidaire avec la cuvette 11.

Les ailettes plus longues 23 et 25 supportent la bague 27.

Du côté supérieur extérieur des ailettes 24 et 25, prés de la bague 27, sont pratiqués des évidements 30 aptes à loger la partie horizontale 33 du bord inférieur de la lamelle annulaire 31 descendant de la calotte 10.

Quelques ailettes plus longues 23 (trois dans l'exemple illustré) sont munies de dents 32 au lieu des évidements 30.

Dans la fig.4 est hachuré le bord inférieur de la lamelle annulaire interne 31, ayant des parties horizontales 33 et qui montre, dans certaines positions, une convexité 34. Trois de ces positions sont illustrées dans l'exemple.

Lorsque la calotte 10 est pressée sur l'entonnoir 16 et si les convexités 34 de la lamelle 31 correspondent aux dents 32 des ailettes 23, le bord 12 de la calotte 10 coïncide avec le bord 13 de la cuvette 11, comme dans la fig.1, étant donné qu'en correspondance de la partie non convexe du bord inférieur de la lamelle 31, c'est-à-dire des parties horizontales 33, ces dernières seront logées dans les évidements 30 des ailettes 24 et 25.

La rotation horizontale de la calotte 12 sur l'entonnoir 16 et, donc, sur la cuvette 11 qui est solidaire avec l'entonnoir, causera le relevage de la calotte 10 par rapport à la cuvette 11 lorsque la convexité 34 dépasse les dents 32 et la partie horizontale 33 de la lamelle 31 s'appuie sur les dents 32, provocant l'ouverture périmétrale 15 comme illustrée dans les figures 2 et 4.

Par ce mouvement contraignant rotatoire horizontal et de translation verticale de la calotte 10, celle-ci pourra prendre les deux positions de fermeture et d'ouverture par rapport à la cuvette 11.

Cette rotation pourra avoir lieu indifféremment dans les deux sens, aussi bien dans le sens des aiguilles d'une montre que dans le sens inverse.

La fermeture se produit dans la position où les convexités 34 correspondent aux dents 32. Tandis que les parois inclinées des convexités 34 coulissent sur les dents 32, les bords 12 (de la calotte 10) et 13 (de la cuvette 11) coulissent les uns sur les autres; au moment où les parties horizontales 33 ont atteint les dents 32, la calotte 10 se lève de la cuvette 11. Les parties horizontales 33 ont deux fois la longueur de la convexité 34 et par conséquent, au lieu de redescendre après une rotation de 60°, suivant de nouveau les ondulations des bords 12 e 13, la calotte 10 reste soulevée, ce qui lui permet de prendre chaque 120°, la position où les deux bords 12 et 13 sont de nouveau parallèles mais séparés, comme illustré dans les figures 2 e 4.

De la fig. 4 on comprendra par intuition que le liquide ne pourra pas sortir, même si l'absorbeur d'humidité est dans sa position de service avec l'ouverture périmétrale 15, sauf dans le cas que l'absorbeur d'humidité soit renversé de propos délibéré et consciemment de 180°et qu'il soit fortement battu, parce que la cuvette 11 contenant le liquide, reste scellée sur son périmètre par l'entonnoir 16 et le liquide renfermé à l'intérieur ne peut sortir qu'en traversant de nouveau le trou 22.

L'absorbeur d'humidité faisant l'objet de cette invention pourra être fourni d'un capuchon de protection transparent, strictement de mesure, qu'il faut appliquer sur la calotte 10 pour l'emballage et le transport.

L'invention en question comprend toutes les variantes de détail et les modifications résultant évidentes aux techniciens de cette branche et qui ne sont pas en dehors du limite de cette invention, mais sont compris dans le domaine des revendications suivantes.

## Revendications

1. Absorbeur d'humidité réalisé en trois parties, comprenant un élément supérieur constitué d'une calotte d'aération (10) trouée, une cuvette inférieure (11) et un élément intermédiaire, 'ayant l'élément intermédiaire en forme d'entonnoir (16), c'est-à-dire ayant la forme d'un cône renversé avec un trou central (22) et un fond (21) en pente vers ledit trou central, et étanche par rapport à la cuvette placée au dessous s'encastrant sur son bord, **caractérisé par le fait que** des ailettes radiales verticales (23, 24, 25), réalisées pour supporter un sachet contentant des sels, sont aménagées sur le fond (21) de l'élément intermédiaire, que la paroi latérale de la calotte se dédouble pour faire descendre une lamelle annulaire (31) interne formant une came avec des parties horizontales (33) et des convexités (34), que quelques ailettes radiales (24, 25) de l'entonnoir (16) sont munies, du côté supérieur extérieur, d'un évidement (30) pour loger les parties horizontales (33) du bord inférieur de la lamelle annulaire interne (31) qui descend de la calotte (10), et que d'autres ailettes (23) sont munies d'une dent (32) formant un cliquet pour le bord inférieur de la lamelle annulaire (31), apte, selon la position des dents par rapport aux parties horizontales et aux convexités de la came, à soulever la calotte (10) en détachant le bord inférieur (12) de la calotte (10) du bord supérieur (13) de la cuvette (11), formant ainsi une ouverture (15) continue périmétrale essentiellement annulaire.

2. Absorbeur d'humidité selon la revendication 1, **caractérisé par le fait que** les bords (12, 13) de la calotte d'aération (10) et de la cuvette (11) ont un développement sinusoïdal et de jonction et **par le fait que** des trous d'aération (14) ont été percés dans le sommet de la calotte (10).

3. Absorbeur d'humidité selon les revendications précédentes, **caractérisé par le fait que** l'entonnoir (16) a inférieurement un anneau (17) ayant un diamètre qui lui permet d'entrer de justesse dans la cuvette (11) et une rainure annulaire (19) s'accouplant à déclenchement avec une nervure annulaire (18) dans la cuvette (11) et **par le fait que** cet entonnoir (16) est réalisé d'une seule pièce.

4. Absorbeur d'humidité selon les revendications précédentes, **caractérisé par le fait qu'**un siège annulaire (20) est pratiqué dans les parois latérales de la cuvette (11) pour loger de justesse l'anneau (17) et que l'anneau (17) et le siège (20) sont munis de crans d'arrêt.

5. Absorbeur d'humidité selon les revendications précédentes, **caractérisé par le fait que** les ailettes radiales verticales (23, 24, 25) sont alternativement plus courtes (24) et plus longues (23, 25).

6. Absorbeur d'humidité selon les revendications précédentes, **caractérisé par le fait que** l'entonnoir (16) termine du côté supérieur d'une bague (27) munie d'un ressaut annulaire (28) s'emboîtant à déclenchement dans la calotte (10) où un ressaut annulaire (29) correspondant est pratiqué, la bague (27) étant supportée par les ailettes plus longues (23 et 25).

7. Absorbeur d'humidité selon les revendications précédentes, **caractérisé par le fait que** les parties horizontales (33) sont deux fois plus longues que les convexités (34).

8. Absorbeur d'humidité selon les revendications précédentes, **caractérisé par le fait qu'**on applique sur la calotte (10) un capuchon transparent de protection, strictement sur mesure.

## Patentansprüche

1. Ein Feuchtigkeitabsorber, der aus drei Teilen ausgebildet ist, die folgendes umfassen: ein oberes Element, bestehend aus einer gelochten Belüftungskappe (10), eine untere Schüssel (11), und ein Zwischenelement, worin das Zwischenelement eine Trichterform (16) hat, d. h. die Form eines umgedrehten Kegels, mit einem zentralen Loch (22) und einem Boden (21) mit einem Gefälle in Richtung auf das zentrale Loch und abdichtet in Bezug auf die darunter liegende Schüssel, die an seinem Rand einrastet, **dadurch gekennzeichnet, dass** vertikale radiale Flügelchen (23, 24, 25), die ausgebildet sind, um einen Salze enthaltenden Beutel zu tragen, auf dem Boden (21) des Zwischenelements angebracht sind, dass die Seitenwand der Kappe sich verdoppelt, um eine innere kreisförmige Lamelle (31) absteigen zu lassen, die eine Nocke mit den horizontalen Abschnitten (33) und Konvexitäten (34) bildet, dass einige der radialen Flügelchen (24, 25) des Trichters (16) an der oberen, äußeren Seite mit einer Aussparung (30) versehen sind, um die horizontalen Abschnitte (33) des unteren Randes der inneren kreisförmigen Lamelle (31) aufzunehmen, die von der Kappe herab reicht, und dass andere Flügelchen (23) mit einer Zacke (32) ausgestattet sind, die eine Sperrklinke für den unteren Rand der kreisförmigen Lamelle (31) bildet, die in der Lage ist, je nach Position der Zacken in Bezug auf die horizontalen Abschnitte und die Konvexitäten der Nocke, die Kappe (10) anzuheben, indem der untere Rand (12) der (10) vom oberen Rand (13) der Schüssel (11) abgetrennt wird, wodurch eine durchgängige umlaufende Öffnung (15) gebildet wird, die im Wesentlichen ringförmig ist.

2. Feuchtigkeitabsorber gemäß Anspruch 1, **dadurch gekennzeichnet, dass** die Ränder (12, 13) der Belüftungskappe (10) und der Schüssel (11) eine Sinus-förmige Ausbildung haben und eine Verbindung bilden, und dass Belüftungslöcher (14) durch den Scheitel der Kappe (10) durchgebrochen wurden.

3. Feuchtigkeitabsorber gemäß den obigen Ansprüchen, **dadurch gekennzeichnet, dass** der Trichter (16) unten einen Ring (17) aufweist, mit einem Durchmesser, der es ihm gestattet, genau in die Schüssel (11) zu passen, und eine kreisförmige Rille (19), die mit einer kreisförmigen Rippe (18) in der Schüssel (11) lösbar gekoppelt ist, und dass der Trichter (16) aus einem einzelnen Stück gefertigt ist.

4. Feuchtigkeitabsorber gemäß den obigen Ansprüchen, **dadurch gekennzeichnet, dass** ein kreisförmiger Sitz (20) in den Seitenwände der Schüssel (11) eingelassen ist, um den Ring (17) genau passend aufzunehmen, und dass der Ring (17) und der Sitz (20) mit Stopprasten ausgestattet sind.

5. Feuchtigkeitabsorber gemäß den obigen Ansprüchen, **dadurch gekennzeichnet, dass** die radialen vertikalen Flügelchen (23, 24, 25) abwechselnd kürzer (24) und länger (23, 25) sind.

6. Feuchtigkeitabsorber gemäß den obigen Ansprüchen, **dadurch gekennzeichnet, dass** der Trichter (16) an seiner Oberseite in einem Ring (27) endet, der mit einem kreisförmigen Vorsprung (28) ausgestattet ist, der ablösbar in die Kappe (10) eingreift, wo ein entsprechender kreisförmiger Vorsprung (29) ausgebildet ist, wobei der Ring (27) durch die längeren Flügelchen (23, 25) getragen wird.

7. Feuchtigkeitabsorber gemäß den obigen Ansprüchen, **dadurch gekennzeichnet, dass** die horizontalen Abschnitte (33) doppelt so lang sind wie die Konvexitäten (34).

8. Feuchtigkeitabsorber gemäß den obigen Ansprüchen, **dadurch gekennzeichnet, dass** auf die Kappe (10) ein genau abgemessener transparenter Schutzdeckel aufgesetzt ist.

## Claims

1. Three-part moisture absorber, comprising an upper part constituted by a perforated ventilation dome (10), a lower tray (11), and an intermediate part, the intermediate part being shaped like a funnel (16), i.e., like an inverted cone with a central hole (22) and a bottom (21) which slopes toward said central hole and is hermetic with respect to the underlying tray, which engages its rim, **characterized in that** vertical radial wings (23, 24, 25), provided in order to support a bag containing salts, are formed on the bottom (21) of the intermediate part; **in that** the side wall of the dome is split in two in order to allow the descent of an internal annular blade (31), which forms a cam with horizontal portions (33) and convex portions (34); **in that** some radial wings (24, 25) of the funnel (16) are provided, on the outer upper side, with a recess (30) for accommodating the horizontal portions (33) of the lower rim of the internal annular blade (31), which descends from the dome (10); and **in that** other wings are provided with a tooth (32), which forms a snap-acting coupling for the lower rim of the annular blade (31), which, depending on the position of the teeth with respect to the horizontal portions and the convex portions of the cam, is adapted to lift the dome (10), separating the lower rim (12) of the dome from the upper rim (13) of the tray (11), thus forming a substantially annular continuous perimetric opening (15).

2. The moisture absorber according to claim 1, **characterized in that** the rims (12, 13) of the ventilation dome (10) and of the tray (11) have a sinusoidal and connecting shape and **in that** ventilation holes (14) are formed in the apex of the dome (10).

3. The moisture absorber according to the preceding claims, **characterized in that** the funnel (16) is provided, in a lower region, with a ring (17) having a diameter which allows it to enter snugly the tray (11), and an annular groove (19), which couples with a snap action to an annular ridge (18) in the tray (11), and **in that** said funnel (16) is formed in one piece.

4. The moisture absorber according to the preceding claims, **characterized in that** an annular receptacle (20) is formed in the side walls of the tray (11) in order to accommodate snugly the ring (17) team, and **in that** the ring (17) and the receptacle (20) are provided with retention teeth.

5. The moisture absorber according to the preceding claims, **characterized in that** the radial wings (23, 24, 25) are alternatively shorter (24) and longer (23,25).

6. The moisture absorber according to the preceding claims, **characterized in that** the funnel (16) ends at the upper side with a ring (27) which is provided with an annular protrusion (29), which interlocks in the tray (10), where a corresponding annular protrusion (29) is provided, the ring (27) being supported by the longer wings (23, 25).

7. The moisture absorber according to the preceding claims, **characterized in that** the horizontal portions (33) are twice as long as the convex portions (34).

8. The moisture absorber according to the preceding claims, **characterized in that** a transparent protective cap is applied to the dome (10) and is strictly to size.
